(19) Europäisches Patentamt
European Patent Office
Office européen des brevets

(11) **EP 1 048 523 A2**

(12) **EUROPÄISCHE PATENTANMELDUNG**

(43) Veröffentlichungstag:
02.11.2000 Patentblatt 2000/44

(51) Int. Cl.⁷: **B60Q 1/115**

(21) Anmeldenummer: 00103745.6

(22) Anmeldetag: 23.02.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.04.1999 DE 19918919**

(71) Anmelder: **WABCO GmbH & CO. OHG**
**30453 Hannover (DE)**

(72) Erfinder: **Neuhaus, Detlev**
**30519 Hannover (DE)**

(74) Vertreter: **Schrödter, Manfred**
**WABCO GmbH & Co. OHG,**
**Postfach 91 12 62**
**30432 Hannover (DE)**

(54) **Verfahren zur Einstellung der Leuchtweite bei einem Fahrzeug mit Niveauverstellung**

(57) Es wird ein Verfahren zur Einstellung der Leuchtweite bei einem Fahrzeug mit Niveauverstellung, vorzugsweise einem Personenkraftwagen mit einer Niveauverstellung an der Hinterachse (2), angegeben, bei dem ohne zusätzlichen Aufwand an Sensoren ein vorgegebener, zulässiger Leuchtweitenbereich der Scheinwerfer auch bei einer Beladungsänderung eingehalten werden kann. Hierbei wird aus dem Signal eines Niveaulagensensors ein entsprechender Korrekturwert für die Einstellung der Niveaulage verstellbarer Federbeine an einer Achse des Fahrzeuges von einem elektronischen Steuergerät automatisch bestimmt. In einer weiteren Ausgestaltung der Erfindung kann durch manuelle Betätigung eines Leuchtweitenreglers ebenfalls eine Anpassung der Niveaulage der Hinterachse (2) zwecks Einstellung der Leuchtweite erfolgen.

FIG 1

**Beschreibung**

Die Erfindung betrifft ein Verfahren zur Einstellung der Leuchtweite bei einem Fahrzeug mit Niveauverstellung gemäß dem Oberbegriff des Patentanspruchs 1.

Ein gattungsgemäßes Verfahren ist aus der DE 38 27 983 C1 bekannt.

Bei dem bekannten Verfahren werden Signale von Sensoren ausgewertet, die eine Information über die relative Stellung der Fahrzeugkarosserie zu der Vorder- und der Hinterachse des in diesem Fall zweiachsigen Fahrzeuges abgeben. Diese Stellung wird auch als Niveaulage der jeweiligen Achse bezeichnet. Unter Auswertung dieser Signale wird dann eine in dem Fahrzeug vorgesehene Niveauregeleinrichtung derart angesteuert, daß die Leuchtweite des Fahrzeuges, genauer gesagt der Fahrzeugscheinwerfer, auch nach einer Beladungsänderung in einem vorgegebenen, zulässigen Bereich bleibt.

Die Verwendung eines eigenen Sensors an jeder Fahrzeugachse zur Ermittlung der Niveaulage ist relativ aufwendig und teuer. Aus der DE 40 05 812 C1 ist des weiteren bekannt, eine Ansteuerung einer Niveauregelanlage zwecks Konstanthaltung der Leuchtweite (auch Leuchtweitenregelung genannt) unter Verwendung nur eines Sensors, der dort die Niveaulage der Hinterachse ermittelt, sowie durch zwei zusätzliche Lastsensoren, die die Belastung zweier Fahrzeugsitze ermitteln, durchzuführen. Hierbei ist ebenfalls der Aufwand und die Kosten für die insgesamt erforderlichen Sensoren relativ hoch.

Der Erfindung liegt daher die Aufgabe zugrunde, ein Verfahren zur Einstellung der Leuchtweite bei einem Fahrzeug mit Niveauverstellung anzugeben, bei dem mit verringertem technischen Aufwand, insbesondere hinsichtlich der Sensoren, auch bei Beladungsänderungen eventuell auftretende Änderungen der Leuchtweite kompensiert werden können.

Diese Aufgabe wird durch die in den Patentansprüchen 1 und 4 angegebene Erfindung gelöst. Weiterbildungen und vorteilhafte Ausgestaltungen der Erfindung sind in den Unteransprüchen angegeben.

Die Erfindung hat den Vorteil, daß ausschließlich auf in einem Fahrzeug mit Niveauverstellung vorhandene Teile wie insbesondere Sensiermittel und Bedienelemente zurückgegriffen wird, so daß keine zusätzlichen Sensiermittel oder Bedienelemente erforderlich sind. Hierdurch ist die Erfindung sehr kostengünstig anwendbar. Als Bedienelement kann in vorteilhafter Weise unmittelbar der in Fahrzeugen neuerer Bauart regelmäßig vorhandene Leuchtweiteneinsteller bzw. Leuchtweitenregler verwendet werden, der dann direkt mit einem elektronischen Steuergerät, das zur Ausführung des erfindungsgemäßen Verfahrens und zur Steuerung des Fahrzeugniveaus dient, verbunden werden.

Die Erfindung wird im folgenden anhand eines Ausführungsbeispiels unter Verwendung von Zeichnungen näher erläutert.

Es zeigen

Fig. 1    ein mit einer Niveauverstellungsanlage versehenes Fahrzeug mit zwei Achsen in einer schematischen Darstellung und

Fig. 2    eine Niveauverstellungsanlage zur Ausführung des erfindungsgemäßen Verfahrens als Blockschaltbild.

In den Figuren werden gleiche Bezugszeichen für einander entsprechende Teile verwendet.

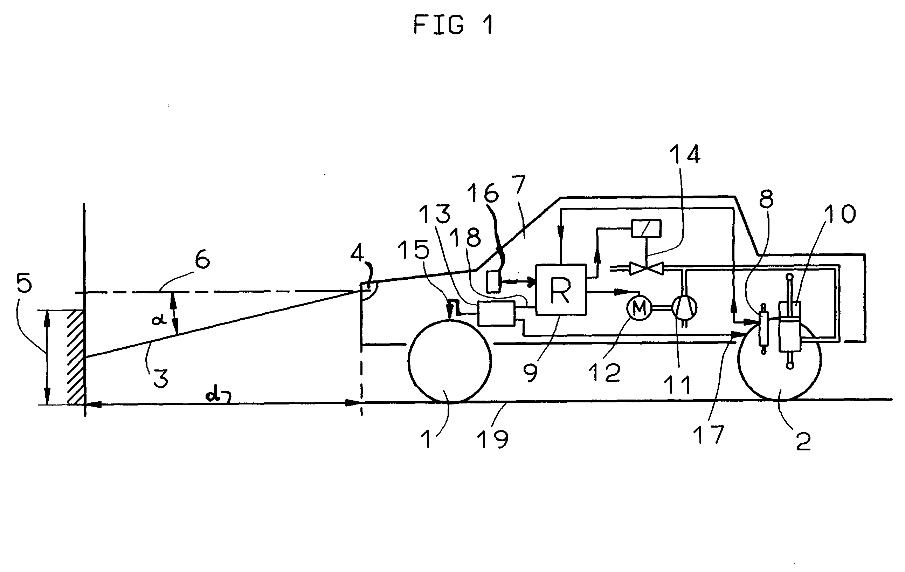

Die Fig. 1 zeigt ein Fahrzeug (7) mit einer Vorderachse (1) und einer Hinterachse (2). Die Räder der Vorderachse (1) sind über eine Federung üblicher Bauart, z. B. mit Spiralfedern, mit dem Fahrzeugaufbau verbunden. Das Fahrzeug (7) weist eine Niveauverstellungsanlage auf, mit der die Niveaulage der Hinterachse (2) verändert werden kann. Die Niveauverstellungsanlage ist vom pneumatischen Typ. Das Fahrzeug (7) weist daher an jedem Rad der Hinterachse (2) ein mit Druckluft beaufschlagbares Federbein (10) auf. Über die Federbeine (10) sind die Räder der Hinterachse (2) mit dem Fahrzeugaufbau verbunden.

Die Federbeine (10) sind pneumatisch parallel geschaltet, d. h. über eine nicht dargestellte Druckluftleitung miteinander verbunden. Da sich hierdurch die Federbeine (10) gleich verhalten, wird der Einfachheit halber im folgenden daher nur noch von einem Federbein (10) gesprochen.

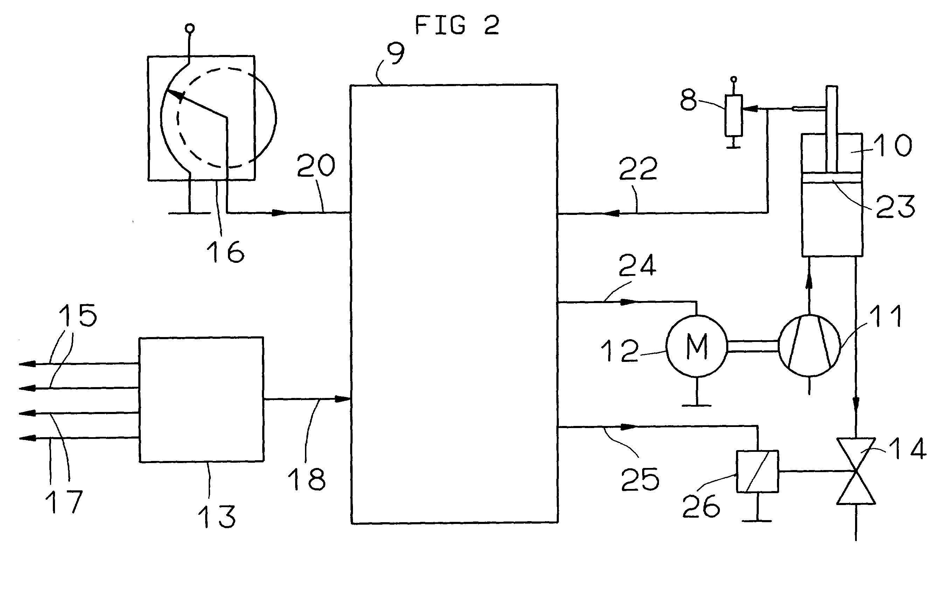

Wie aus Fig. 2 ersichtlich ist, enthält das Federbein einen Kolben (23). Der Kolben (23) ist infolge einer Druckluftbeaufschlagung oder einer Beladungsänderung verschiebbar.

Das Federbein (10) ist über einen von einem Elektromotor (12) antreibbaren Kompressor (11) mit Druckluft befüllbar. Der Elektromotor (12) kann von einem elektronischen Steuergerät (9), das auch als Regler dient, über eine Leitung (24) ein- und ausgeschaltet werden. Zur Druckverminderung ist das Federbein (10) über ein von einem Elektromagneten (26) betätigbares Ventil (14) mit der umgebenden Atmosphäre verbindbar. Der Elektromagnet (26) ist über eine Leitung (25) von dem Steuergerät (9) ein- und ausschaltbar.

Der Kompressor (11) kann statt von einem Elektromotor auch von dem Antriebsmotor des Fahrzeuges (7) angetrieben werden. Da er in einem solchen Fall kontinuierlich Druckluft fördern würde, wäre in einer solchen Ausgestaltung der Erfindung in der Druckluftverbindungsleitung zwischen dem Kompressor und dem Federbein ein weiteres Ventil, das die Druckluftförderung zu dem Federbein (10) absperren kann, vorzusehen. Das zusätzliche Ventil wäre dann über einen weiteren Elektromagneten ebenfalls von dem Steuergerät (9) ansteuerbar, z. B. statt des Elektromotors (12).

Mit der Hinterachse (2) des Fahrzeuges (7) ist außerdem ein im Ausführungsbeispiel als Potentiometer ausgebildeter Sensor (8) mechanisch verbunden, welcher ein als Achssignal (H2) dienendes, die Niveaulage der Hinterachse (2) repräsentierendes Spannungssignal über eine Leitung (22) an das Steuergerät (9) abgibt.

Statt der zuvor beschriebenen Ausführungsform des Sensors (8), bei dem die Niveaulage der Hinterachse (2) direkt ermittelt wird, ist auch ein sogenannter Achslastsensor, welcher ein die Beladung der Achse repräsentierendes Achssignal abgibt, verwendbar. Das in einem solchen Fall an das Steuergerät (9) abgegebene Beladungssignal würde dann in dem Steuergerät (9) unter Verwendung der Federkonstante der Hinterachsfederung in ein die Niveaulage der Hinterachse (2) repräsentierendes Achssignal (H2) umgerechnet werden. Ein entsprechender Wert, welcher diese Federkonstante angibt, wäre dann vorzugsweise in dem Steuergerät (9) gespeichert.

Die zuvor beschriebene Niveauverstellungsanlage bewirkt in einer bekannten Betriebsart, daß bei Veränderungen der Niveaulage der Hinterachse (2), ausgehend von einer Normallage, der Druck in dem Federbein (10) solange erhöht bzw. verringert wird, bis sich wieder die gewünschte Normallage einstellt. Hierzu wertet das Steuergerät (9) fortlaufend das Spannungssignal von dem Sensor (8) aus und schaltet je nach Bedarf den Elektromotor (12) oder den Elektromagneten (26) ein und wieder aus.

Als Lichtquelle (4) weist das Fahrzeug (7) an seiner Vorderseite angeordnete Scheinwerfer auf, die Lichtstrahlen in Vorwärtsfahrtrichtung aussenden. Der wesentliche Teil dieser Lichtstrahlen ist in der Fig. 1 mittels der Linie (3) symbolisiert, welche bei herkömmlichen Scheinwerfern in der Regel der Mittelachse eines ausgesendeten Lichtkegels entspricht. Die Linie (3) verläuft in einem von einer Parallelen (6) von der Straßenoberfläche (19) abweichenden Winkel ($\alpha$). Die Linie (3) trifft in einem vorgegebenen Bereich (5) auf ein in einem vorgegebenen Abstand (d) von den Scheinwerfern (4) angeordneten Hindernis auf. Der Bereich (5) muß dabei innerhalb gesetzlicher Vorgaben liegen. Bei einer Abweichung der Linie (3) oberhalb der oberen Grenze des Bereichs (5) besteht Blendgefahr für entgegenkommende Fahrzeuge, bei einer Unterschreitung des Bereichs (5) ist die Ausleuchtung der Fahrbahn unzureichend.

Wenn bei dem Fahrzeug (7) eine Änderung der Beladung eintritt, z. B. dadurch daß ein Passagier einsteigt oder ein Gepäckstück im Kofferraum verstaut wird, würde dies die zuvor beschriebene Niveauverstellungsanlage nach Abklingen eventueller Einschwingvorgänge erkennen und nach herkömmlicher Vorgehensweise durch Änderung des Luftdrucks in dem Federbein (10) ausregeln, so daß wieder die ursprüngliche Niveaulage an der Hinterachse (2) hergestellt wird. Je nach Anordnung der zusätzlichen Beladung, d.

h. vor oder hinter der Hinterachse (2), kann nun der Winkel ($\alpha$) in der einen oder der anderen Richtung verändert sein.

Wenn die Beladungszunahme vor der Hinterachse (2) erfolgt, z. B. dadurch daß ein Passagier einsteigt, dann bewirkt ein Anteil dieser zusätzlichen Beladung, daß die Vorderachse (1) einfedert und somit ihre Niveaulage verringert. Bei infolge einer Regelungsfunktion der Niveauverstellungsanlage gleichbleibender Niveaulage der Hinterachse (2) wäre der Winkel ($\alpha$) dann vergrößert, so daß unter Umständen der Bereich (5) unterschritten wird.

Wenn dagegen eine Beladungszunahme hinter der Hinterachse (2) erfolgt, z. B. dadurch daß ein Gepäckstück im Kofferraum verstaut wird, dann erfolgt eine Entlastung und somit eine Erhöhung der Niveaulage an der Vorderachse (1), was bei infolge der Regelung gleichbleibender Niveaulage an der Hinterachse (2) zu einer Verringerung des Winkels ($\alpha$) führt. Hierbei kann es passieren, daß der Bereich (5) überschritten wird.

Bei einer Verringerung der Beladung sind in analoger Weise ebenfalls Über- bzw. Unterschreitungen des Bereichs (5) möglich.

Unter Anwendung der im folgenden beschriebenen Verfahrensweise für eine Anpassung des Drucks in dem Federbein (10) sowie der angegebenen Bestimmungsgleichung zur Ermittlung der Veränderung der Niveaulage an der Vorderachse (1) ist es möglich, ohne weitere Sensoren und ohne Kenntnis des Schwerpunkts, an dem in dem Fahrzeug (7) eine Be- bzw. Entladung erfolgt, die bekannte Regelung der Niveaulage an der Hinterachse (2) derart zu modifizieren, daß unter verschiedensten Beladungszuständen die Linie (3), d. h. also der wesentliche Teil der ausgesendeten Lichtstrahlen, zumindest in dem vorgegebenen, gesetzlich definierten Bereich (5) gehalten werden kann.

Zur Bestimmung einer resultierenden Veränderung ($\Delta$H1) der Niveaulage an der Vorderachse (1) infolge einer Veränderung ($\Delta$H2) der Niveaulage an der Hinterachse (2) wird in einer bevorzugten Ausführungsform der Erfindung ein vorgegebener Veränderungs-Verhältniswert (V) verwendet. Der Veränderungs-Verhältniswert (V) ist fahrzeugspezifisch z. B. gemäß der Fahrzeuggeometrie und der Lage von Zuladungs- oder Gepäckräumen in dem Fahrzeug (7) festzulegen. Er wird dann vorzugsweise in dem Steuergerät (9) gespeichert, z. B. in einem wiederbeschreibbaren, nichtflüchtigen Speicher. Die Ermittlung der Veränderung ($\Delta$H1) der Niveaulage an der Vorderachse (1) erfolgt dann gemäß folgender Gleichung:

$$\Delta H1 = V \cdot \Delta H2$$

Es stehen hierbei positive Werte der jeweiligen Veränderung ($\Delta$H1, $\Delta$H2) für ein Anheben der jeweiligen Fahrzeugachse (1, 2) über ein Normalniveau, und negative Werte für ein Absinken unter das Normalniveau.

Die soeben beschriebene Ausführungsform der Erfindung ist vorzugsweise bei solchen Fahrzeugen einzusetzen, bei denen eine Beladung nur an einer Stelle bzw. an einem relativ eng begrenzten Bereich des Fahrzeuges erfolgen kann, z. B. bei einer PKW-Limousine. Bei Fahrzeugen, die weitergehende Variationsmöglichkeiten hinsichtlich des Beladungsortes bieten, z. B. PKW-Kombifahrzeuge, kann zusätzlich oder alternativ zu der vorerwähnten Ausführungsform die im folgenden erläuterte Ausführungsform der Erfindung vorteilhaft angewendet werden.

Fahrzeuge neuerer Bauart weisen in der Regel Bremssysteme auf, die teilweise oder vollständig elektronisch gesteuert werden. Als Beispiel für eine teilweise elektronisch gesteuerte Bremsanlage sei eine Druckmittelbremsanlage herkömmlicher Bauart mit einem Antiblockiersystem (ABS) genannt, wie in den Figuren mittels der Bezugszeichen (13, 15, 17) schematisch dargestellt. Derartige Antiblockiersysteme weisen beispielsweise ein elektronisches Steuergerät (13) und über Leitungen (15, 17) mit dem Steuergerät (13) verbundene Sensoren auf. Weitere übliche Elemente derartiger Antiblockiersysteme, wie z. B. Ventileinrichtungen, sind im vorliegenden Ausführungsbeispiel zur Vereinfachung nicht dargestellt.

Bei dem zuvor beschriebenen Antiblockiersystem werden in dem Steuergerät (13) über geeignete Sensoren die Drehgeschwindigkeiten der einzelnen Fahrzeugräder ermittelt und daraus bei einer Abbremsung des Fahrzeuges (7) der Bremsschlupf der einzelnen Räder bestimmt. Bei Abbremsungen, bei denen aufgrund der ermittelten Schlupfwerte kein Eingriff des Antiblockiersystems im Sinne einer Blockierverhinderung erforderlich ist, kann aus den bei der Bremsung auftretenden Differenzen zwischen den Bremsschlupfwerten an der Vorderachse (1) und an der Hinterachse (2) des Fahrzeuges (7) auf das Verhältnis zwischen der Achslast an der Vorderachse (1) und der Achslast an der Hinterachse (2) geschlossen werden. Ein so ermitteltes Achslastverhältnis wird häufig auch für eine von dem Antiblockiersystem gesteuerte, achslastabhängige Bremskraftverteilungsfunktion verwendet. Ein entsprechendes Verfahren hierfür ist beispielsweise aus der DE 197 07 210 A1 bekannt.

Das von dem Steuergerät (13) ermittelte Verhältnis zwischen den Achslasten an der Vorderachse (1) und der Hinterachse (2) wird in vorteilhafter Weise an das Steuergerät (9) übermittelt. Hierzu sind das Steuergerät (9) und das Steuergerät (13) für das Antiblockiersystem vorzugsweise über ein Datenbussystem (18) zum Datenaustausch miteinander verbunden. Es ist auch möglich, die beiden, zuvor erwähnten Steuergeräte (9, 13) als ein einziges Steuergerät auszuführen.

Mit der dem Steuergerät (9) so übermittelten Information über das Verhältnis zwischen den Achslasten kann bei gleichen Federkonstanten an der Vorderachse (1) und der Hinterachse (2) gemäß der zuvor beschriebenen Verfahrensweise direkt die Veränderung (ΔH1) an der Vorderachse (1) ermittelt werden. Das Verhältnis zwischen den Achslasten wird dabei direkt als Veränderungs-Verhältniswert (V) verwendet. Bei ungleichen Federkonstanten an der Vorderachse (1) und der Hinterachse (2) ist das Achslastverhältnis noch mit dem Verhältnis der Federkonstanten zu korrigieren.

Bei einer Niveauregelung herkömmlicher Ausführung würde das Steuergerät (9) nun Betätigungssignale an den Motor (12) bzw. an den Elektromagneten (26) senden, damit die Veränderung (ΔH2) kompensiert wird. Dies führt zu der bereits beschriebenen unerwünschten Auswirkung auf die Leuchtweite. Unter Anwendung der Erfindung kompensiert das Steuergerät (9) die Veränderung (ΔH2) an der Hinterachse jedoch nicht bis zum Wert Null, sondern nur bis zum Erreichen eines der Veränderung (ΔH1) an der Vorderachse entsprechenden Wertes, d. h. es verbleibt eine Veränderung der Niveaulage an der Hinterachse der Größe (ΔH1).

Gemäß einer weiteren vorteilhaften Ausgestaltung der Erfindung, die auch in Kombination mit der zuvor beschriebenen Ausgestaltung vorteilhaft anwendbar ist, ist das Steuergerät (9) mit einem von einem Insassen des Fahrzeugs (7) bedienbaren Bedienelement, insbesondere einem Leuchtweitenregler (16), verbunden. Ein von dem Leuchtweitenregler (16) abgegebenes elektrisches Spannungssignal wird über eine Leitung (20) dem Steuergerät (9) zugeführt, das dieses Signal im Rahmen eines Verfahrens zur automatischen Niveaueinstellung, wie bereits zuvor beschrieben, berücksichtigt.

In einer bevorzugten Ausgestaltungen der Erfindung erfolgt die Berücksichtigung des Signals des Leuchtweitenreglers (16) derart, daß eine Verschiebung der Niveaulage der Hinterachse (2) nach oben oder unten möglich ist. Dies ist in besonders einfacher Weise in dem Regelverfahren z. B. dadurch realisierbar, daß das Spannungssignal des Leuchtweitenreglers, welches beispielsweise einen zum Nullwert symmetrischen Wertebereich aufweist, zu dem Signal des Sensors (8) addiert wird, was im Ergebnis je nach Einstellung des Leuchtweitenreglers zu einer Erhöhung oder Verringerung des resultierenden, für die Niveauverstellung berücksichtigten Wertes des Sensorsignals bewirkt.

Bei einer Beladungsänderung kann nun der Fahrer des Fahrzeuges (7) nach seinem Ermessen durch Betätigung des Leuchtweitenreglers die Niveaulage an der Hinterachse (2) derart verstellen, daß die Linie (3) innerhalb des vorgegebenen, gesetzlich definierten Bereichs (5) liegt.

Der Fachmann erkennt, daß der Schutzbereich der Erfindung sich nicht in den vorstehend beispielhaft beschriebenen Ausführungen und Anwendungsmöglichkeiten erschöpft, sondern alle Ausgestaltungen und Anwendungsmöglichkeiten erfaßt, die sich den Patentansprüchen unterordnen.

**Patentansprüche**

1. Verfahren zur Einstellung der Leuchtweite bei einem Fahrzeug (7), wobei das Fahrzeug (7) folgende Merkmale aufweist:

   a) wenigstens eine Lichtquelle (4),

   b) wenigstens zwei Achsen (2, 7),

   c) wenigstens eine der Achsen (2) ist niveauverstellbar,

   d) es ist wenigstens ein Sensor (8) vorhanden, der ein die Beladung bzw. die Niveaulage der Achse (2) repräsentierendes Achssignal (H2) abgibt,
   gekennzeichnet durch folgende Merkmale:

   e) aus einer Veränderung ($\Delta$H2) des Achssignals (H2) wird automatisch eine resultierende Veränderung ($\Delta$H1) der Beladung bzw. der Niveaulage an einer anderen Achse (1) ermittelt,

   f) in Abhängigkeit von den Veränderungen ($\Delta$H1, $\Delta$H2) wird die niveauverstellbare Achse (2) derart verstellt, daß die Leuchtweite der Lichtquelle (4) innerhalb eines erwünschten Bereichs liegt.

2. Verfahren nach Anspruch 1, dadurch gekennzeichnet, daß für die automatische Ermittlung der resultierenden Veränderung ($\Delta$H1) ein vorgegebener, fahrzeugspezifischer Veränderungs-Verhältniswert (V) verwendet wird.

3. Verfahren nach einem der vorhergehenden Ansprüche, dadurch gekennzeichnet, daß für die automatische Ermittlung der resultierenden Veränderung ($\Delta$H1) eine von einem elektronisch gesteuerten Bremssystem während einer Bremsung ermittelte Information über die Achslast (G1) an der anderen Achse (1) bzw. das Verhältnis der Achslasten (GV) der Achsen (1, 2) verwendet wird.

4. Verfahren zur Einstellung der Leuchtweite bei einem Fahrzeug (7), insbesondere Verfahren nach Anspruch 1, wobei das Fahrzeug (7) folgende Merkmale aufweist:

   a) wenigstens eine Lichtquelle (4),

   b) wenigstens zwei Achsen (2, 7),

   c) wenigstens eine der Achsen (2) ist niveauverstellbar,
gekennzeichnet durch folgendes Merkmal:

   d) die niveauverstellbare Achse (2) ist mittels eines von einem Insassen des Fahrzeugs (7) bedienbaren Bedienelements (16), insbesondere eines Leuchtweitenreglers, verstellbar.

# FIG 1

EP 1 048 523 A2

FIG 2

EP 1 048 523 A2